# FASCICULE DE BREVET EUROPEEN

(11) **EP 1 802 911 B1**
(45) Date de publication et mention de la délivrance du brevet: **11.08.2010**
(21) Numéro de dépôt: 05815659.7
(22) Date de dépôt: 20.10.2005
(51) Int. Cl.: F17C 13/00, F17C 3/08

(54) **CRYOSTAT POUR L'ETUDE D'ECHANTILLONS SOUS VIDE**
KRYOSTAT ZUM UNTERSUCHEN VON PROBEN IN EINEM VAKUUM
CRYOSTAT FOR STUDYING SAMPLES IN A VACUUM

(30) Priorité: 22.10.2004 FR 0452412
(43) Date de publication de la demande: 04.07.2007
(73) Titulaire: Commissariat à l'Énergie Atomique et aux Énergies Alternatives, 75015 Paris (FR)
(72) Inventeur: NOE, Pierre, F-38000 Grenoble (FR); PICARD, Emmanuel, F-38410 Saint Martin d'Uriage (FR)
(74) Mandataire: Poulin, Gérard
(86) Numéro de dépôt international: PCT/FR2005/050879
(87) Numéro de publication internationale: WO 2006/043010

(56) Documents cités:
- US-A- 3 611 746
- US-A- 3 894 403
- US-A- 4 194 119
- US-A- 4 501 131

## Description

### DOMAINE TECHNIQUE

La présente invention se rapporte de façon générale à un cryostat pour l'étude d'échantillons sous vide à l'aide d'un rayonnement électromagnétique, et plus particulièrement à celui des cryostats pour microscope destinés à maintenir l'échantillon à une température comprise entre 80°K et 300°K sous un vide secondaire, c'est-à-dire compris approximativement entre 10⁻⁴ et 10⁻⁵ mbar.

Ce type de cryostat est notamment employé pour la réalisation d'analyses de spectroscopie optique d'échantillons, ou encore en vue d'effectuer des mesures de micro-photoluminescence. Un exemple de cryostat est divulgué dans le document US 389 4403.

### ÉTAT DE LA TECHNIQUE ANTÉRIEURE

De l'art antérieur, on connaît différents types de cryostat capables de maintenir l'échantillon dans une enceinte sous vide à une température d'environ 80°K.

Tout d'abord, on connaît les cryostats à flux continu d'azote ou d'hélium liquide, tels que ceux commercialisés sous les dénominations « MicrostatHiRes » et « MicrostatN » (marques déposées) de la société Oxford Instruments.

Ces cryostats présentent certains inconvénients non négligeables, dont celui de disposer d'un écartement minimal de grandeur trop élevée entre un hublot prévu sur la paroi extérieure du cryostat et l'échantillon, pour permettre l'utilisation d'objectifs achromatiques de grossissement important à courte distance focale.

D'autre part, l'angle d'admittance est limité à 160° à cause des contraintes dues à la nature du système de refroidissement employé, et l'utilisation de l'azote ou de l'hélium engendre des coûts de fonctionnement sensiblement importants.

En outre, on connaît les cryostats à doigt froid de type Joule-Thomson, mettant en oeuvre un principe de détente adiabatique de gaz sous pression (par exemple 120 bars) à travers un serpentin de verre, afin de générer un refroidissement de l'échantillon se situant en bout de doigt.

Globalement, le doigt froid est placé dans une enceinte permettant de le maintenir sous vide par pompage, et de limiter ainsi les problèmes de condensation/gel ainsi que les problèmes de convection thermique.

Avec un tel agencement, l'échantillon, agencé sur un support d'échantillon lui-même monté sur une extrémité libre d'une partie doigt du doigt froid, est observé à travers un hublot de 1,5 mm d'épaisseur et écarté d'une distance supérieure à 2 mm de cet échantillon. Par conséquent, de la même façon que pour les cryostats à flux continu d'azote ou d'hélium liquide dont la distance minimale de travail est également de l'ordre de 2 mm, la conception même de ces cryostats à doigt froid de l'art antérieur interdit l'emploi de certains grossissements à courte distance focale.

Par ailleurs, les hublots présents sur la paroi extérieure délimitant l'enceinte sous vide limitent fortement l'angle d'admittance du cryostat, et la rotation de l'échantillon autour de son propre axe est impossible en raison du positionnement aléatoire du doigt froid et de cet échantillon à l'intérieur de l'enceinte, qui dispose de plus d'une forme sensiblement carrée.

### EXPOSÉ DE L'INVENTION

L'invention a donc pour but de proposer un cryostat pour l'étude d'échantillons sous vide à l'aide d'un rayonnement électromagnétique, remédiant au moins partiellement aux inconvénients mentionnés ci-dessus relatifs aux réalisations de l'art antérieur.

Pour ce faire, l'invention a pour objet un cryostat pour l'étude d'échantillons sous vide à l'aide d'un rayonnement électromagnétique, comportant un doigt froid pourvu d'une partie doigt ainsi que d'une partie embase solidaire de la partie doigt et permettant notamment l'arrivée de gaz sous pression, le cryostat comprenant en outre un support d'échantillon monté sur une extrémité libre de refroidissement de la partie doigt, cette même partie doigt du doigt froid étant placée dans une enceinte sous vide. L'enceinte sous vide est partiellement délimitée par une pièce creuse réalisée d'un seul tenant et définissant une cavité ouverte à ouverture unique traversée par la partie doigt, le support d'échantillon se trouvant à l'intérieur de la cavité ouverte précitée. De plus, l'enceinte sous vide est également délimitée par un corps de cryostat comportant un évidement débouchant traversé par la partie doigt, ce corps de cryostat étant raccordé de façon étanche d'une part à la pièce creuse, et d'autre part à la partie embase du doigt froid. Enfin, le cryostat est également équipé d'un dispositif de mise en rotation coopérant avec une surface extérieure cylindrique de section circulaire du corps de cryostat.

Avec une telle configuration où l'échantillon à analyser est donc destiné à se situer entièrement à l'intérieur de la cavité ouverte, et par conséquent à être entouré à 360° par la pièce creuse définissant cette cavité, il est donc à comprendre que cette pièce creuse est naturellement réalisée d'une seule pièce dans un matériau transparent au rayonnement électromagnétique utilisé, afin de permettre la réalisation de l'étude souhaitée. Ainsi, le fait de positionner l'échantillon dans la pièce creuse précitée présentant une telle transparence afin de pouvoir être traversée par ledit rayonnement électromagnétique lors de l'étude de l'échantillon, implique avantageusement que les possibilités d'analyse et de mesure de cet échantillon sont largement accrues par rapport à celles rencontrées antérieurement avec la solution de hublot plan.

A cet égard, il est noté que si le matériau retenu pour la pièce creuse est fonction de la nature du rayonnement électromagnétique employé pour l'étude de l'échantillon, il est également de préférence choisi de manière à être transparent à la lumière visible. A titre d'exemple indicatif, le matériau retenu peut être le quartz, dans la mesure où ce dernier est transparent à la lumière visible, et également aux rayonnements infrarouge et ultraviolet envisagés dans diverses études d'échantillon.

Par ailleurs, avec le cryostat selon l'invention, il est possible d'utiliser un objectif de microscope à très fort grossissement, notamment dans le but de réaliser des cartographies spectrales, grâce au fait que l'échantillon peut être placé sur le support d'échantillon à une distance très faible de la pièce creuse réalisée d'une seule pièce et traversée par le rayonnement électromagnétique, cette distance pouvant en effet être inférieure ou égale à 1 mm.

Cette faculté n'est bien entendu pas rencontrée dans les solutions de l'art antérieur dans lesquelles le rayonnement est destiné à traverser un hublot maintenu par une surépaisseur de paroi, assurant la tenue mécanique et la tenue au vide de ce hublot. Effectivement, la présence de cette surépaisseur interdit inéluctablement à l'échantillon de se situer à une distance très proche du hublot, et empêche de ce fait l'utilisation d'objectif de microscope à très fort grossissement.

D'autre part, avec un tel agencement, il est facilement envisageable d'effectuer une mise en rotation de l'échantillon à l'aide du dispositif de mise en rotation coopérant avec la surface extérieure cylindrique de section circulaire du corps de cryostat, dans le but de réaliser des lobes d'émission sur 180° à travers la pièce creuse en quartz, et même sur 360° grâce à un support d'échantillon troué monté sur le doigt froid. Dans ce dernier cas, le support d'échantillon présente alors un orifice débouchant destiné à être recouvert par l'échantillon.

En outre, le cryostat selon l'invention, préférentiellement conçu de manière à maintenir un échantillon se situant dans l'enceinte à une température comprise entre 80°K et 300°K, et de préférence à une température d'environ 80°K, sous un vide secondaire, permet d'exciter et de collecter sur la tranche de l'échantillon. A titre indicatif, il est noté que pour les échantillons concernés, qui peuvent par exemple présenter une épaisseur d'environ 700 µm pour une surface carrée ou rectangulaire dont les côtés ont une dimension inférieure ou égale à 10 mm, la tranche de l'échantillon est à comprendre comme définissant l'ensemble des faces de l'échantillon qui sont agencées selon l'épaisseur, perpendiculairement à la surface de l'échantillon sur laquelle est déposée la couche à analyser.

Enfin, comme évoqué ci-dessus, il est rappelée que l'utilisation préférentielle du quartz, et donc de la silice, pour réaliser la pièce creuse délimitant l'enceinte au niveau de l'échantillon à analyser, permet notamment de transmettre par rayonnement ultraviolet.

Comme indiqué précédemment, l'enceinte sous vide est également délimitée par un corps de cryostat comportant un évidement débouchant traversé par la partie doigt, ce corps de cryostat étant raccordé de façon étanche d'une part à la pièce creuse, et d'autre part à la partie embase du doigt froid. Dans un tel cas, la pièce creuse peut alors être assemblée fixement sur une bride de fixation montée sur le corps de cryostat, en prévoyant par exemple que la pièce creuse soit assemblée fixement sur la bride de fixation par collage, et que cette dernière soit montée sur le corps de cryostat par vissage.

A cet égard, il est précisé que la présence de cette bride de fixation permet de faciliter le montage de l'échantillon sur le support d'échantillon du cryostat, dans le sens où il suffit de démonter cette bride et de retirer la pièce creuse collée sur cette dernière pour pouvoir placer l'échantillon sur le support prévu à cet effet et fixé au doigt froid.

Toujours de manière préférentielle, le corps de cryostat est monté sur la partie embase du doigt froid par vissage.

D'autre part, ce corps de cryostat comporte préférentiellement un orifice permettant la mise sous vide de l'enceinte.

De préférence, la partie creuse en quartz dispose d'une forme de tube obturé à l'une de ses deux extrémités, ce tube pouvant par exemple être de section circulaire ou de section sensiblement carrée. Ainsi, en employant une telle pièce en forme de tube, il est clair que des analyses/mesures peuvent être réalisées à une très faible distance de l'échantillon se situant à l'intérieur de l'enceinte sous vide.

D'autre part, il est noté que lorsqu'une section circulaire est retenue, un avantage réside dans le fait que les lobes d'émission peuvent être réalisés en collectant la lumière avec une distance et un angle d'incidence constants à travers la pièce creuse, ce qui n'était bien évidemment pas le cas avec les hublots plans rencontrés dans les réalisations de l'art antérieur. D'autre part, comme cela a été mentionné précédemment, il est facilement possible d'exciter et de collecter sur 180° ou plus, toujours en mettant l'échantillon en rotation.

Enfin, il est préférentiellement prévu que la partie doigt prenne la forme d'une lame droite en verre dans laquelle est gravé un serpentin permettant la détente du gaz sous pression à travers une succession de diaphragmes.

En outre, l'invention a également pour objet un ensemble pour l'étude d'échantillons sous vide, cet ensemble comprenant une source de rayonnement électromagnétique ainsi qu'un cryostat tel que celui défini ci-dessus. Dans un tel cas, la pièce creuse d'un seul tenant du cryostat est naturellement constituée à l'aide d'un matériau transparent audit rayonnement électromagnétique, afin de permettre la réalisation des études souhaitées sur l'échantillon.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un cryostat pour l'étude d'échantillons sous vide, selon un mode de réalisation préféré de la présente invention ;
- la figure 2 représente une vue en perspective du doigt froid employé dans le cryostat montré sur la figure 1 ;
- la figure 3 représente une vue en perspective du corps de cryostat employé dans le cryostat montré sur la figure 1, en association avec le doigt froid de la figure 2 ;
- la figure 4 représente une vue en perspective d'une pièce creuse en quartz employée dans le cryostat montré sur la figure 1, ainsi qu'une bride de fixation destinée à assurer le montage de cette pièce creuse sur le corps de cryostat ; et
- la figure 5 représente une vue en perspective d'un assemblage entre l'ensemble montré sur la figure 3, et la pièce creuse en quartz de la figure 4.

### EXPOSÉ DÉTAILLÉ D'UN MODE DE RÉALISATION PRÉFÉRÉ

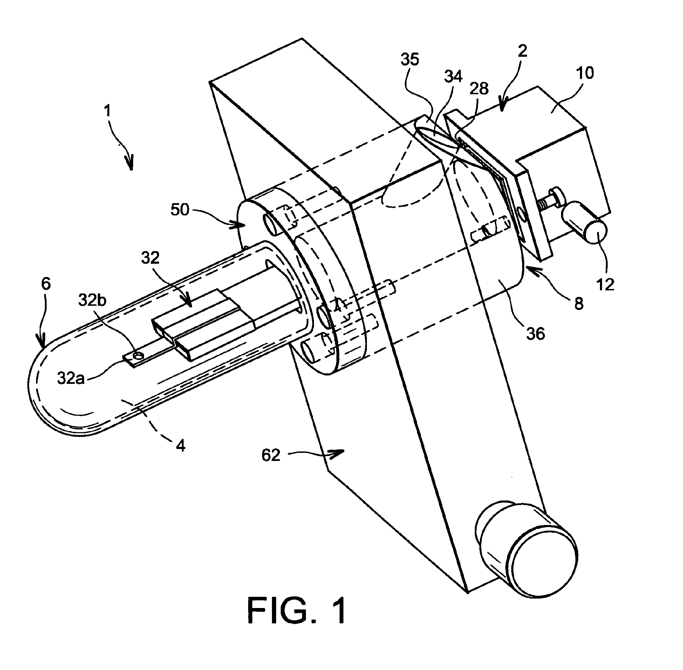

En référence à la figure 1, on peut voir un cryostat 1 pour l'étude d'échantillons sous vide à l'aide d'un rayonnement électromagnétique (non représenté), ce cryostat 1 étant destiné à coopérer avec un objectif de microscope (non représenté) en vue d'effectuer des analyses de spectroscopie optique d'échantillons, des mesures de micro-photoluminescence, ou encore toute autre étude d'échantillons en transmission, absorption et/ou émission, connue de l'homme du métier.

De plus, ce cryostat 1 est préférentiellement conçu de manière à maintenir l'échantillon (non représenté) à une température comprise entre 80°K et 300°K, et de préférence à une température de l'ordre de 80°K, sous un vide secondaire.

Globalement, le cryostat 1 comporte un doigt froid 2, ainsi qu'une enceinte sous vide 4 formée notamment par l'intermédiaire d'une pièce creuse 6 réalisée d'un seul tenant, et d'un corps de cryostat 8 traversé par le doigt froid 2.

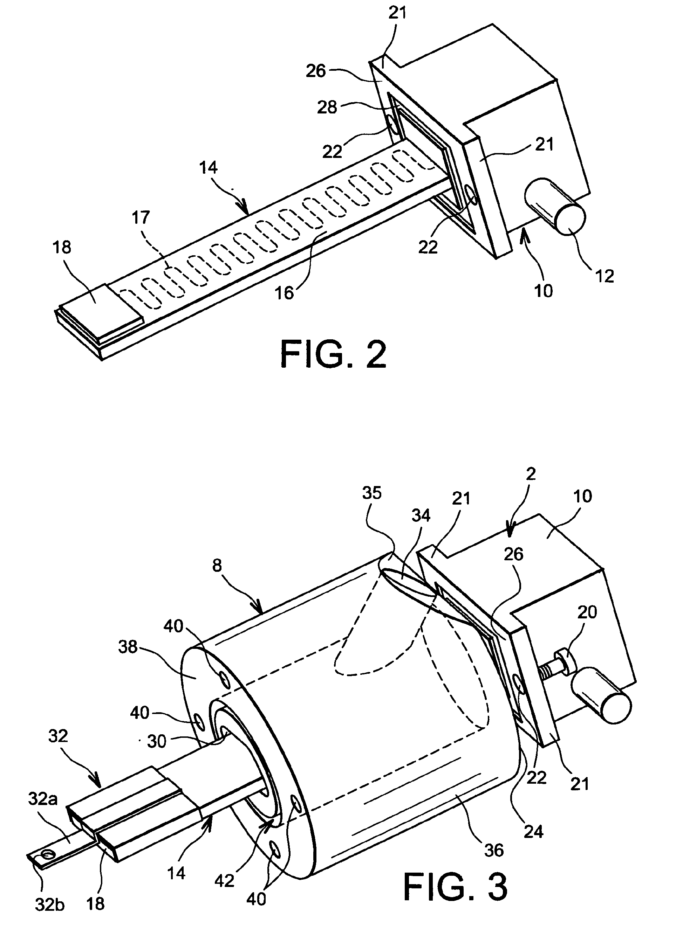

Tout d'abord en référence à la figure 2, on peut apercevoir que le doigt froid 2 employé est du type connu de l'homme du métier, puisqu'il fonctionne selon le même principe que celui exposé pour les cryostats à doigt froid de type Joule-Thomson de l'art antérieur.

En effet, ce doigt froid 2 constitue un système de refroidissement par détente d'un gaz sous une pression pouvant atteindre 120 bars ou plus à travers un serpentin de verre, cette détente adiabatique reposant sur le principe thermodynamique connu de la pompe à chaleur.

Plus précisément, on peut voir que le doigt froid 2 comporte deux parties distinctes solidaires l'une de l'autre, à savoir une partie embase 10 comportant notamment un orifice 12 pour l'injection de gaz sous pression dans le doigt, et à partir de laquelle fait saillie vers l'avant une partie doigt 14, qui prend quant à elle la forme d'une lame droite en verre dans laquelle est gravé un serpentin 17 (uniquement représenté en pointillés sur la figure 2), permettant la détente du gaz sous pression à travers une succession de diaphragmes.

Cette partie doigt 14 dispose donc d'une première extrémité 16 raccordée solidairement à la partie embase 10 du doigt froid 2, ainsi que d'une extrémité libre de refroidissement 18, destinée à refroidir l'échantillon à analyser à l'aide du cryostat 1 et du microscope.

A titre indicatif, le doigt froid 2 retenu peut être identique ou similaire à celui commercialisé par la société MMR Technologies, Inc, dans le produit référencé « Model U377-0 ».

En référence à présent à la figure 3, on voit une représentation éclatée du corps de cryostat 8 assemblé sur le doigt froid 2 par l'intermédiaire de vis 20. En effet, ces vis 20 traversent des ailettes 21 de la partie embase 10 du doigt 2 au niveau de passages 22, et sont insérées dans des trous taraudés (non visibles) prévus au niveau d'une surface plane latérale arrière 24 du corps 8, qui peut alors être plaquée contre une surface plane 26 de la partie embase 10. Il est noté que comme cela apparaît clairement sur la figure 3, les surfaces planes 24 et 26 susmentionnées sont de préférence perpendiculaires à une direction principale (non représentée) de la partie doigt 14 du doigt froid 2. De plus, afin d'assurer une étanchéité entre les éléments 2 et 8, la surface plane 26 est pourvue d'un méplat sur lequel est positionné un joint plat, ou bien est pourvue d'un système comprenant une gorge associée à un joint torique destiné à contacter la surface plane 24.

Le corps 8 présente une forme globale annulaire d'axe parallèle à la direction principale de la partie doigt 14, et comporte donc un évidement central débouchant 30 qui est entièrement traversé par cette partie doigt 14 du doigt 2. Comme on peut le voir sur cette figure 3, l'extrémité libre de refroidissement 18, faisant saillie par rapport au corps de cryostat 8 et n'étant donc pas située à l'intérieur de l'évidement 30, est équipée d'un support d'échantillon 32. Ce support d'échantillon 32 est typiquement réalisé en cuivre pour ses propriétés de conduction thermique, dans le but d'évacuer la chaleur, et de permettre par conséquent le refroidissement de l'échantillon collé à l'aide d'une colle thermique sur ce support d'échantillon 32.

Le support d'échantillon 32 est du type troué de manière à autoriser la réalisation de lobes d'émission sur 360°. Il présente une partie avant de support 32a sur laquelle peut être fixé l'échantillon à analyser. En outre, le support d'échantillon 32 est installé de sorte qu'un axe principal d'un échantillon donné reposant sur ce support 32 soit confondu avec l'axe du corps de cryostat 8.

A proximité du contact entre les surfaces planes 24 et 26, le corps 8 présente un orifice 34 permettant le pompage du cryostat, cet orifice 34 destiné à coopérer avec des moyens de pompage appropriés (non représentés) étant réalisé de façon à déboucher à l'intérieur de l'évidement 30 destiné à constituer une partie de l'enceinte sous vide 4. Préférentiellement, l'orifice 34 est situé sur une portion supérieure du corps de cryostat 8, et débouche extérieurement au niveau d'une surface biseautée 35 de jonction entre la surface plane 24 et une surface extérieure cylindrique de section circulaire 36 centrée sur l'axe du corps annulaire 8.

Toujours en référence à la figure 3, le corps de cryostat 8 présente donc une surface extérieure cylindrique de section circulaire 36, ainsi qu'une surface plane latérale avant 38 parallèle à la surface plane latérale arrière 24. Cette surface plane 38 comporte des trous taraudés 40 pour le montage de la pièce creuse 6, ainsi qu'une gorge 42 pour y loger un joint torique destiné à assurer l'étanchéité entre les éléments 8 et 6.

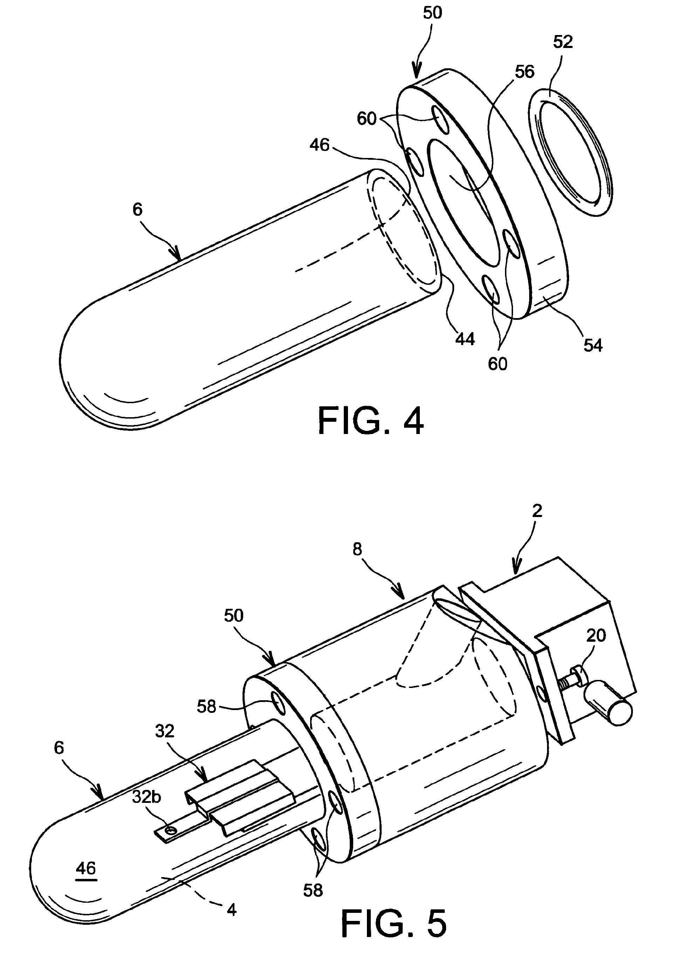

A présent en référence à la figure 4, on peut voir que la pièce creuse 6, de préférence réalisée d'un seul tenant en quartz et également appelée nez en quartz optique, prend la forme préférentielle d'un tube de section circulaire obturé à l'une de ses deux extrémités, et présentant une ouverture 44 à l'autre de ces mêmes extrémités. Bien entendu, le tube pourrait adopter toute autre forme, en disposant par exemple d'une section sensiblement carrée, sans sortir du cadre de l'invention.

Cette pièce creuse 6 définit donc une cavité 46 ouverte uniquement au niveau de l'ouverture 44, cette cavité 46 constituant une partie de l'enceinte sous vide 4. A ce titre, il est précisé que c'est à l'intérieur de cette cavité ouverte 46 qu'est destiné à être agencé l'échantillon à analyser, de la même façon que le support d'échantillon 32 ainsi qu'au moins une portion de la partie doigt 14 du doigt froid 2 sont également destinés à se situer dans cette cavité 46.

Pour son assemblage sur le corps de cryostat 8, la pièce creuse en quartz 6 est assemblée fixement au niveau de l'ouverture 44 à l'aide d'une colle ultravide, sur une bride de fixation 50 qui est quant à elle destinée à être vissée et plaquée sur la surface plane latérale avant 38 du corps 8, avec le joint torique 52 préalablement placé à l'intérieur de la gorge 42 prévue à cet effet. Naturellement, lorsque le cryostat 1 se trouve dans un état final de montage tel que représenté sur la figure 1, la bride de fixation 50 est traversée sensiblement perpendiculairement par la partie doigt 14 du doigt froid 2, qui s'étend vers l'avant au-delà de cette bride 50.

De préférence, la bride de fixation 50 présente une surface extérieure cylindrique de section circulaire 54 de même diamètre que la surface extérieure cylindrique de section circulaire 36 du corps 8, tandis qu'une surface intérieure cylindrique de section circulaire 56 de cette même bride 50 dispose d'un diamètre supérieur ou égal au diamètre le plus grand de l'évidement 30 de ce corps 8.

En référence à la figure 5, on voit donc que la pièce creuse 6 en forme de tube, la bride de fixation 50, ainsi que le corps de cryostat 8, sont disposés coaxialement selon un axe parallèle à la direction principale de la partie doigt 14 du doigt froid 2.

En outre, on peut voir que la bride de fixation 50 est assemblée à l'aide de vis 58 sur le corps 8, ces vis 58 traversant des passages 60 (figure 4) prévus sur cette même bride 50, et coopérant avec les trous taraudés 40 indiqués précédemment.

Lorsque tous ces éléments sont assemblés tel que représenté, il est donc à comprendre que l'enceinte sous vide 4 est globalement constituée par la cavité ouverte 46 et l'évidement débouchant 30, et que cette enceinte 4 est donc délimitée d'avant en arrière successivement par la pièce creuse en quartz 6, la bride de fixation 50, le corps de cryostat 8, et la partie embase 10 du doigt froid 2. De plus, cette enceinte 4 est totalement étanche, et uniquement ouverte au niveau de l'orifice 34 pour le pompage nécessaire à la mise sous vide.

Par ailleurs, le support d'échantillon 32 se situant entièrement dans la cavité ouverte 46, l'échantillon lui-même, lorsqu'il est correctement positionné, est donc lui aussi placé complètement à l'intérieur de cette cavité 46, au niveau de laquelle il est facilement possible d'approcher un objectif de microscope en vue de réaliser les analyses requises.

A nouveau en référence à la figure 1, on peut voir que le cryostat 1 est équipé d'un dispositif de mise en rotation 62, qui se fixe autour de la surface extérieure 36 du corps 8, de façon à mettre ce dernier en rotation autour de son propre axe. Plus précisément, le dispositif de mise en rotation 62 peut présenter une orifice (non référencé) de diamètre sensiblement identique à celui de la surface extérieure 36, de manière à ce que le corps de cryostat 8 puisse être inséré dans ce même orifice, afin d'y subir une rotation, par exemple en étant entraîné par friction. Ainsi, le corps de cryostat 8 étant solidaire du doigt froid 2 et de la pièce creuse en quartz 6, et l'échantillon étant fixé par collage à l'aide d'une colle thermique disposant d'une très bonne conductivité thermique sur le support d'échantillon 32, lui-même monté fixement sur le doigt froid 2, c'est donc l'ensemble de ces éléments précités qui subissent la rotation appliquée au corps de cryostat 8 par le dispositif 62. De plus, la rotation s'effectuant selon l'axe du corps de cryostat 8, l'échantillon centré par l'intermédiaire du support d'échantillon 32 est donc également mis en rotation selon son propre axe principal.

Ce dispositif de mise en rotation 62, éventuellement motorisé, peut prendre toute forme connue de l'homme du métier, et facilite la réalisation de lobes d'émission par auto-centrage de l'axe de l'échantillon sur l'axe de rotation du corps de cryostat 8. En d'autres termes, le support 32 étant ajusté afin d'amener la surface supérieure de l'échantillon sur l'axe du corps 8 du cryostat 1 correspondant également à l'axe de rotation de ce dernier, il est donc aisé, au moyen du dispositif de mise en rotation 62 manuel ou motorisé, de mettre l'échantillon en rotation par rapport à un axe coïncidant avec sa surface supérieure, appelé ci-dessus axe principal. De ce cette façon, la présence du dispositif de mise en rotation 62 facilite la réalisation de lobes d'émission car il permet l'emploi d'une source fixe de rayonnement électromagnétique.

A cet égard, comme mentionné ci-dessus, il est noté que le support d'échantillon 32 représenté sur les figures est du type troué, à savoir qu'il présente un orifice débouchant 32b au niveau de la partie avant de support 32a. Ainsi, lorsque l'échantillon est situé de façon à recouvrir l'orifice 32b, il est avantageusement possible de réaliser des lobes d'émission sur 360° à travers la pièce creuse en quartz, par mise en rotation du cryostat.

Si la réalisation de la pièce creuse 6 en quartz constitue un mode de réalisation préféré de la présente invention, il est à comprendre que le matériau est essentiellement choisi en fonction de la nature du rayonnement électromagnétique utilisé pour effectuer l'étude de l'échantillon, de manière à ce que ce matériau soit transparent à ce rayonnement ainsi qu'à la lumière visible. Par conséquent, le matériau est principalement déterminé suivant qu'il s'agisse d'une source du type lumière visible, rayon X, ultraviolet, infrarouge, etc. A titre d'exemple illustratif, le béryllium (Be) peut être utilisé dans le cas des rayons X.

D'autres matériaux envisagés vont être présentés ci-dessus, en association avec des gammes de longueurs d'ondes dans lesquelles ces différents matériaux assurent les propriétés de transparence requises. Naturellement, les matériaux répertoriés ci-après ne sont donnés qu'à titre d'exemples indicatifs, et il est précisé que le choix du matériau et de l'épaisseur pour la pièce creuse 6 d'un seul tenant peut facilement être réalisé par l'homme du métier connaissant la nature du rayonnement électromagnétique (longueur d'onde), ainsi que celle de l'étude effectuée sur l'échantillon.

### Exemples de matériaux envisagés

- germanium (Ge) : 1,7 - 28 µm
- silicium (Si) : 1,1 - 8 µm et 22 - 70 µm
- arséniure de gallium (GaAs) : 1,1 - 31 µm
- tellure de cadmium (CdTe) : 1,1 - 30 µm
- sulfure de zinc (ZnS) : 0,75 - 12 µm
- séléniure de zinc (ZnSe) . 0,6 - 19 µm
- bromure d'argent (AgBr) : 0,6 - 35 µm
- bromoiodure de thallium (KRS-5) : 0,6 - 40 µm
- niobate de lithium (LiNbO3) : 0, - 6 µm
- chlorure d'argent (AgCl) : 0,5 - 21 µm
- dioxyde de titane (TIO2) : 0,5 - 2,5 µm
- bromoiodure de thallium (KRS-6) : 0,4 - 26 µm
- iodure de césium (CsI) : 0,30 - 50 µm
- chlorure de sodium (NaCl) : 0,28 - 18 µm
- silice fondue IR (SiO2) : 0,28 - 3,3 µm
- bromure de potassium (KBr) : 0,28 - 22 µm
- chlorure de potassium (KC1) : 0,27 - 18 µm
- bromure de césium (CsBr) : 0,25 - 38 µm
- calcite (CaCO3) : 0,22 - 2,2 µm
- saphir (Al2O3) : 0,25 - 2,8 µm
- quartz (SiO2) : 0,18 - 2,3 µm
- silice fondue UV (SiO2) _{:} 0,17 - 2 µm
- Fluorure de calcium (CaF2) : 0,17 - 9 µm
- Fluorure de baryum (BaF2) : 0,18 - 11 µm
- Fluorure de magnesium (MgF2) : 0,15 - 6,5 µm
- Fluorure de lithium (LiF) : 0,14 - 6 µm

Bien entendu, diverses modifications peuvent être apportées par l'homme du métier au cryostat 1 pour l'étude d'échantillons sous vide qui vient d'être décrit, uniquement à titre d'exemple non limitatif.

## Revendications

1. Cryostat (1) pour l'étude d'échantillons sous vide à l'aide d'un rayonnement électromagnétique, ledit cryostat comportant un doigt froid (2) pourvu d'une partie doigt (14) ainsi que d'une partie embase (10) solidaire de ladite partie doigt (14) et permettant notamment l'arrivée de gaz sous pression, ledit cryostat comprenant en outre un support d'échantillon (32) monté sur une extrémité libre de refroidissement (18) de la partie doigt (14), cette même partie doigt (14) du doigt froid (2) étant placée dans une enceinte sous vide (4), ladite enceinte sous vide (4) étant partiellement délimitée par une pièce creuse (6) réalisée d'un seul tenant et définissant une cavité ouverte (46) à ouverture unique (44) traversée par ladite partie doigt (14), ledit support d'échantillon (32) se trouvant à l'intérieur de ladite cavité ouverte (46), dans lequel ladite enceinte sous vide (4) est également délimitée par un corps de cryostat (8) comportant un évidement débouchant (30) traversé par ladite partie doigt (14), ce corps de cryostat (8) étant raccordé de façon étanche d'une part à ladite pièce creuse (6), et d'autre part à ladite partie embase (10) du doigt froid (2), et **caractérisé en ce que** ledit cryostat est également équipé d'un dispositif de mise en rotation (62) coopérant avec une surface extérieure cylindrique de section circulaire (36) du corps de cryostat (8).

2. Cryostat (1) selon la revendication 1, **caractérisé en ce que** ladite pièce creuse (6) est assemblée fixement sur une bride de fixation (50) montée sur ledit corps de cryostat (8).

3. Cryostat (1) selon la revendication 2, **caractérisé en ce que** ladite pièce creuse (6) est assemblée fixement sur la bride de fixation (50) par collage, et **en ce que** cette dernière est montée sur ledit corps de cryostat (8) par vissage.

4. Cryostat (1) selon l'une quelconque des revendications précédentes, **caractérisé en ce que** ledit corps de cryostat (8) est monté sur ladite partie embase (10) du doigt froid (2) par vissage.

5. Cryostat (1) selon l'une quelconque des revendications précédentes, **caractérisé en ce que** ledit corps de cryostat (8) comporte un orifice (34) permettant la mise sous vide de ladite enceinte (4).

6. Cryostat (1) selon l'une quelconque des revendications précédentes, **caractérisé en ce que** ladite pièce creuse (6) dispose d'une forme de tube obturé à l'une de ses deux extrémités.

7. Cryostat (1) selon la revendication 6, **caractérisé en ce que** ladite partie creuse (6) dispose d'une forme de tube de section circulaire.

8. Cryostat (1) selon la revendication 6, **caractérisé en ce que** ladite pièce creuse (6) dispose d'une forme de tube de section sensiblement carrée.

9. Cryostat (1) selon l'une quelconque des revendications précédentes, **caractérisé en ce qu'**il est conçu de manière à maintenir un échantillon se situant dans ladite enceinte (4) à une température d'environ 80°K, et sous vide secondaire.

10. Cryostat (1) selon l'une quelconque des revendications précédentes, **caractérisé en ce que** ladite pièce creuse (6) définissant la cavité ouverte (46) est réalisée en quartz.

11. Cryostat (1) selon l'une quelconque des revendications précédentes, **caractérisé en ce que** ledit support d'échantillon (32) présente un orifice débouchant (32b) destiné à être recouvert par l'échantillon.

12. Cryostat (1) selon l'une quelconque des revendications précédentes, **caractérisé en ce que** ladite partie doigt (14) prend la forme d'une lame droite en verre dans laquelle est gravé un serpentin (17) permettant la détente du gaz sous pression à travers une succession de diaphragmes.

13. Ensemble pour l'étude d'échantillons sous vide comprenant une source de rayonnement électromagnétique, ainsi qu'un cryostat (1) selon l'une quelconque des revendications précédentes.

## Claims

1. Cryostat (1) for studying samples in a vacuum using electromagnetic radiation, said cryostat comprising a cold finger (2) equipped with a finger portion (14) as well as a base portion (10) rigidly connected to the finger portion (14) and enabling in particular the arrival of pressurised gas, which cryostat also includes a sample support (32) mounted on a free end for cooling (18) of the finger portion (14), wherein this same finger portion (14) of the cold finger (2) is placed in a vacuum chamber (4), wherein said vacuum chamber (4) is partially defined by a one-piece hollow part (6) defining an open cavity (46) with a single opening (44) through which the finger portion (14) passes, and the sample support (32) is located inside the aforementioned open cavity (46), wherein said vacuum chamber (4) is also defined by a cryostat body (8) comprising a through-hole (30) through which the finger portion (14) passes, wherein said cryostat body (8) is connected in a sealed manner to the hollow part (6) and to the base portion (10) of the cold finger (2), and **characterised in that** the cryostat is also equipped with a rotation device (62) cooperating with an external cylindrical surface with a circular cross-section (36) of the cryostat body (8).

2. Cryostat (1) according to claim 1, **characterised in that** said hollow part (6) is securely assembled to an attachment flange (50) mounted on said cryostat body (8).

3. Cryostat (1) according to claim 2, **characterised in that** said hollow part (6) is assembled securely to the attachment flange (50) by gluing, and **in that** the latter is mounted on said cryostat body (8) by screwing.

4. Cryostat (1) according to any one of the previous claims, **characterised in that** said cryostat body (8) is mounted on said base portion (10) of the cold finger (2) by screwing.

5. Cryostat (1) according to any one of the previous claims, **characterised in that** said cryostat body (8) comprises a hole (34) allowing for the vacuum drawing of said chamber (4).

6. Cryostat (1) according to any one of the previous claims, **characterised in that** said hollow part (6) has a tube shape closed off at one of its two ends.

7. Cryostat (1) according to claim 6, **characterised in that** said hollow part (6) has a tube shape with a circular cross-section.

8. Cryostat (1) according to claim 6, **characterised in that** said hollow part (6) has a tube shape with a substantially square cross-section.

9. Cryostat (1) according to any one of the previous claims, **characterised in that** it is designed so as to maintain a sample located in said chamber (4) at a temperature of aground 80 °K, and in a secondary vacuum.

10. Cryostat (1) according to any one of the previous claims, **characterised in that** said hollow part (6) defining the open cavity (46) is made of quartz.

11. Cryostat (1) according to any one of the previous claims, **characterised in that** said sample support (32) has a through-hole (32b) intended to be covered by the sample.

12. Cryostat (1) according to any one of the previous claims, **characterised in that** said finger portion (14) has the form of a straight glass slide in which a coil (17) is etched, enabling the expansion of the pressurised gas through a series of diaphragms.

13. Assembly for studying samples in a vacuum, **characterised in that** it includes a source of electromagnetic radiation, as well as a cryostat (1) according to any one of the previous claims.

## Patentansprüche

1. Kryostat (1) zum Untersuchen von Proben unter Vakuum mit Hilfe einer elektromagnetischen Strahlung, wobei der genannte Kryostat einen Kaltfinger (2) umfasst, mit einem Fingerteil (14) sowie einem mit dem genannten Fingerteil (14) verbundenen und insbesondere die Zuleitung von Druckgas ermöglichenden Sockelteil (10), wobei der genannte Kryostat außerdem einen Probenträger (32) umfasst, der auf ein freies Kühlungsendstück (18) des Fingerteils (14) montiert ist, und derselbe Fingerteil (14) des Kaltfingers (2) sich in einem Vakuumbehälter (4) befindet, wobei der genannte Vakuumbehälter (4) partiell begrenzt ist durch ein Hohlteil (6), hergestellt aus einem Stück und einen offenen Hohlraum (46) mit einer einzigen Öffnung (44) definierend, durchquert von dem genannten Fingerteil (14), so dass der genannte Probenträger (32) sich im Innern des offenen Hohlraums (46) befindet,
bei dem der genannte Vakuumbehälter (4) auch durch ein Kryostatgehäuse (8) mit einer Mündungsaussparung (30) begrenzt wird, durchquert von dem genannten Fingerteil (14), wobei dieses Kryostatgehäuse (8) dicht befestigt ist, einerseits an dem genannten Hohlteil (6) und andrerseits an dem genannten Sockelteil (10) des Kaltfingers (2),
**dadurch gekennzeichnet, dass** der genannte Kryostat auch mit einer Drehvorrichtung (62) ausgerüstet ist, die mit einer zylinderischen Außenoberfläche (36) des Kryostatgehäuses (8) von kreisrundem Querschnitt kooperiert.

2. Kryostat (1) nach Anspruch 1, **dadurch gekennzeichnet, dass** das genannte Hohlteil (6) fest mit einem Befestigungsflansch (50) zusammengebaut ist, der auf das genannte Kryostatgehäuse (8) montiert ist.

3. Kryostat (1) nach Anspruch 2, **dadurch gekennzeichnet, dass** das genannte Nohiteü (6) durch Klebung fest mit dem Befestigungsflansch (50) zusammengebaut ist, und **dadurch**, dass dieser Letztere mittels Verschraubung auf das Kryostatgehäuse (8) montiert ist.

4. Kryostat (1) nach einem der vorhergehenden Anspruche, **dadurch** gekenntzeichnet, dass das genannte Kryostatgehäuse (8) mittels Verschraubung auf den genannten Sockelteil (10) des Kaltfingers (2) montiert ist.

5. Kryostat (1) nach einem der vorhergehenden Ansprüche, **dadurch gekennzeichnet, dass** das genannte Kryostatgehäuse (8) eine Öffnung (34) zur Erzeugung eines Vakuums in dem genannten Behälter (4) umfasst.

6. Kryostat (1) nach einem der vorhergehenden Ansprüche, **dadurch** gekenntzeichnet, dass das genannte Hohlteil (6) die Form eines an einem seiner Enden verschlossenen Rohrs aufweist.

7. Kryostat (1) nach Anspruch 6, **dadurch gekennzeichnet, dass** das genannte Hohlteil (6) die Form eines Rohrs mit kreisrundem Querschnitt aufweist.

8. Kryostat (1) nach Anspruch 6, **dadurch gekennzeichnet, dass** das genannte Hohlteil (6) die Form eines Rohrs mit im Wesentlichen quadratischem Querschnitt aufweist.

9. Kryostat (1) nach einem der vorhergehenden Ansprüche, **dadurch gekennzeichnet, dass** er fähig ist, eine Probe, die sich in dem genannten Behälter (4) befindet, unter Sekundärvakuum auf einer Temperatur von ungefähr 80°K zu halten.

10. Kryostat (1) nach einem der vorhergehenden Ansprüche, **dadurch gekennzeichnet, dass** das genannte den offenen Hohlraum (46) definierende Hohlteils (6) aus Quarz ist.

11. Kryostat (1) nach einem der vorhergehenden Ansprüche, **dadurch gekennzeichnet, dass** der Probenträger (32) eine freie Öffnung (32b) aufweist, dazu bestimmt, durch die Probe bedeckt zu werden.

12. Kryostat (1) nach einem der vorhergehenden Ansprüche, **dadurch** gekenntzeichnet, dass der genannte Fingerteil (14) die Form einer geraden Lamelle aus Glas aufweist, die schlangenförmig geätzt ist (17), was die Entspannung des Druckgases durch eine Folge von Diaphragmen bzw. Drosseln bzw. Ausbrüchen ermöglicht.

13. Einheit zur Untersuchung von Proben unter Vakuum, eine elektromagnetische Strahlungsquelle sowie einen Kryostat (1) nach einem der vorhergehenden Ansprüche umfassend.
